# FASCICULE DE BREVET EUROPEEN

(11) **EP 1 423 902 B1**
(45) Date de publication et mention de la délivrance du brevet: **08.11.2017**
(21) Numéro de dépôt: 02774901.9
(22) Date de dépôt: 05.09.2002
(51) Int. Cl.: H02K 7/09, H02K 7/00, H02K 15/00, F16C 32/04

(54) **SYSTÈME MODULAIRE DE SUSPENSION ET D'ENTRAINEMENT EN ROTATION D'UN ARBRE TOURNANT**
MODULARES SYSTEM ZUR AUFHÄNGUNG UND ZUM BETRIEB EINER ROTIERENDEN WELLE
MODULAR SYSTEM FOR SUSPENDING AND ROTATING A ROTARY SHAFT

(30) Priorité: 06.09.2001 FR 0111563
(43) Date de publication de la demande: 02.06.2004
(73) Titulaire: SKF MAGNETIC MECHATRONICS, 27950 Saint-Marcel (FR)
(72) Inventeur: BRUNET, Maurice, F-27950 Sainte Colombre pres Vernon (FR); LAPIERRE, Armand, F-27120 Fontaine sous Jouy (FR)
(74) Mandataire: Desormiere, Pierre-Louis
(86) Numéro de dépôt international: PCT/FR2002/003016
(87) Numéro de publication internationale: WO 2003/021748

(56) Documents cités:
- EP-A- 0 600 270
- EP-A- 0 827 257
- US-A- 3 391 291
- US-A- 3 758 941
- US-A- 3 981 628
- US-A- 5 321 329
- US-B1- 6 194 852

## Description

La présente invention a pour objet un système de suspension et d'entraînement en rotation d'un arbre tournant.

Tout équipement de machine tournante, combinant moteur électrique et paliers magnétiques sur un mono-arbre, apporte de nombreux avantages. L'homogénéité d'une machine tournante entièrement électrique écarte les dangers dus à la présence d'huile ou gaz. C'est une machine propre et non polluante pour l'environnement. Aussi, grâce à l'absence de contact entre des éléments en mouvement relatif les uns par rapport aux autres, à l'absence de fluide ainsi qu'aux très faibles pertes d'énergie des paliers magnétiques, la fiabilité, l'efficacité et le rendement d'une telle machine s'en trouvent augmentés.

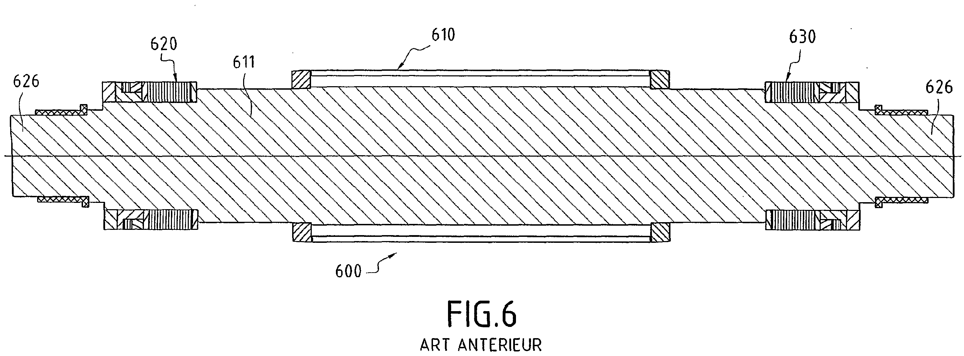

Ces machines tournantes font usage d'arbres tournants conformes au concept illustré sur la figure 6. Ce concept correspond à l'utilisation d'un système de suspension et d'entraînement 600 comportant un arbre tournant monobloc 611 comprenant une partie rotorique 610 associée à un moteur électrique et des parties rotoriques 620, 630 associées à des paliers magnétiques. Sur la figure 6, par souci de simplification, on n'a pas représenté les parties statoriques fixes du moteurs électrique et des paliers magnétiques.

Les machines tournantes à moteur électrique et paliers magnétiques utilisant un arbre monobloc sont particulièrement utilisées dans le domaine de la compression d'air, la réfrigération en cycle air ou fréon, les pompes à chaleur ou encore la récupération d'énergie par détente de gaz. Voir aussi US 5 321 329 A. Il est important, dans le cadre de ces applications, que le système utilisé soit optimisé pour que le rendement de la machine soit le plus élevé possible. Cette optimisation doit tenir compte non seulement du système moteur proprement dit, mais aussi de tout l'ensemble constitué d'un moteur et d'un ou plusieurs paliers magnétiques. Il faut aussi tenir compte des pertes par ventilation, des pertes magnétiques des paliers, du mode de refroidissement, etc.

Tous ces paramètres conduisent en général à une conception particulière pour chaque besoin, ce qui augmente considérablement les coûts.

Ainsi, la réalisation d'un arbre monobloc 611 est délicate et coûteuse, d'autant plus que l'arbre est commun au moteur et aux paliers magnétiques. De plus, la conception de l'arbre tournant 611 varie selon que le moteur est inductif ou synchrone à aimants permanents. En outre, les extrémités 626 de l'arbre tournant 611 peuvent être différentes à chaque fois en fonction des roues ou rouets rapportés qui dépendent de l'application considérée. Pour changer une extrémité, il faut ainsi remplacer tout l'arbre monobloc.

Pour les mêmes raisons évoquées ci-dessus, l'entretien et la réparation d'un arbre monobloc 611 sont complexes et onéreux tant en outillage qu'en temps. Un système selon le préambule de la revendication 1 est décrit dans US 3 391 291 A. L'invention se propose, pour remédier aux inconvénients précités, d'adopter un concept modulaire d'arbre tournant pour un système de suspension et d'entraînement en rotation permettant un montage et un démontage très aisés. Il est alors possible de changer un seul module en cas de besoin de réparation avec des coûts très nettement plus faibles que dans une version à arbre monobloc.

Un autre but de la présente invention est d'assurer une certaine qualité d'assemblage entre les modules pour que la dynamique d'un arbre à modules soit équivalente à celle d'un arbre monobloc.

Ces buts sont atteints, conformément à l'invention, grâce à un système modulaire de suspension et d'entraînement en rotation d'un arbre tournant, comprenant :
- un module moteur comportant un arbre tournant central présentant sur chaque extrémité une première surface frontale annulaire d'appui délimitant une première région conique, caractérisé en ce qu'il comprend:
   - un premier module palier magnétique comportant un premier arbre tournant, ce premier arbre tournant ayant une extrémité présentant une deuxième surface frontale annulaire d'appui délimitant une deuxième région conique, et destinée à coopérer avec l'une des premières surfaces frontales annulaires d'appui du module moteur,
   - un deuxième module palier magnétique comportant un deuxième arbre tournant, ce deuxième arbre tournant ayant une extrémité présentant une troisième surface frontale annulaire d'appui délimitant une troisième région conique, et destinée à coopérer avec l'autre des premières surfaces frontales annulaires d'appui du module moteur,
et en ce que le module moteur et les premier et deuxième modules paliers magnétiques sont centrés entre eux par la coopération entre d'une part les premières régions coniques, et d'autre part les deuxième et troisième régions coniques et sont assemblés solidairement avec une pression de contact entre d'une part les premières surfaces frontales annulaires d'appui, et d'autre part les deuxième et troisième surfaces frontales annulaires d'appui par l'intermédiaire d'un tirant à bouts filetés vissés dans les premier et deuxième modules paliers magnétiques et passant dans des premier, deuxième et troisième alésages alignés axialement et ménagés dans le module moteur et les premier et deuxième modules paliers magnétiques respectivement.

Avantageusement, les premières, deuxième et troisième surfaces frontales annulaires d'appui respectivement du module moteur et des premier et deuxième modules paliers magnétiques sont perpendiculaires à un axe de rotation de l'arbre tournant central.

Selon un mode particulier de réalisation, les premières régions coniques sont concaves et s'engagent avec frettage respectivement dans les deuxième et troisième régions coniques qui sont convexes.

Selon un autre mode particulier de réalisation, les premières régions coniques sont convexes et s'engagent avec frettage respectivement dans les deuxième et troisième régions coniques qui sont concaves.

Selon un premier mode particulier de réalisation, au moins l'une des première, deuxième et troisième régions coniques est un cône standard massif.

Selon un second mode particulier de réalisation, au moins l'une des première, deuxième et troisième régions coniques est un cône standard fendu.

Les première, deuxième et troisième régions coniques peuvent présenter un angle d'ouverture au sommet compris entre environ 5° et 20°.

Une extrémité du premier arbre tournant du premier module palier magnétique ou une extrémité du deuxième arbre tournant du deuxième module palier magnétique est taraudée sur une partie de son alésage pour recevoir le tirant et l'autre extrémité est libre pour accueillir un moyen de fixation d'un organe fonctionnel tel qu'une roue.

L'arbre tournant central du module moteur comporte à au moins l'une de ses extrémités une rainure circonférentielle pour le positionnement d'un outillage permettant d'assembler le module moteur et les premier et deuxième modules paliers magnétiques.

Le tirant comporte sur chacune de ses extrémités un taraudage destiné à recevoir l'outillage permettant d'assembler le module moteur et les premier et deuxième modules paliers magnétiques.

L'invention concerne également un module palier magnétique pour un système de suspension et d'entraînement en rotation, caractérisé en ce qu'il comporte un arbre tournant à alésage axial, l'arbre tournant présentant sur au moins une de ses extrémités une surface frontale annulaire d'appui délimitant une région conique et destinée à être assemblée solidairement avec une extrémité complémentaire d'un autre arbre tournant par l'intermédiaire d'un tirant vissé dans l'alésage de l'arbre tournant du module palier magnétique.

L'invention concerne encore un module moteur pour un système de suspension et d'entraînement en rotation, caractérisé en ce qu'il comporte un arbre tournant à alésage axial, l'arbre tournant présentant sur chaque extrémité une surface frontale annulaire d'appui délimitant une région conique de l'alésage axial et une rainure circonférentielle étant formée à au moins l'une des extrémités de l'arbre tournant.

Selon un aspect particulier de l'invention, un procédé d'assemblage d'un système de suspension et d'entraînement en rotation d'un arbre tournant est caractérisé en ce qu'il comprend les étapes suivantes :
a/ centrer un module moteur traversé par un tirant avec des premier et deuxième modules paliers magnétiques à l'aide de régions coniques complémentaires formées d'une part aux extrémités du module moteur et d'autre part à une extrémité de chacun des premier et deuxième modules paliers magnétiques,
b/ immobiliser le module moteur et exercer, sur une première extrémité du tirant, une force extérieure de traction dans la direction de l'axe OO' du module moteur de manière à réaliser un frettage conique ainsi que la mise en contact de surfaces annulaires d'appui formées respectivement à une extrémité du module moteur et à une extrémité du premier module palier magnétique qui coopère avec l'autre extrémité du tirant,
c/ maintenir la force extérieure de traction et visser le deuxième module palier magnétique non fretté autour de la première extrémité du tirant réalisant la mise en contact d'une région conique de ce deuxième module avec une région conique du module moteur, et
d/ supprimer la force extérieure de traction, de telle sorte que le module moteur et les premier et deuxième modules paliers magnétiques soient assemblés solidairement avec une pression de contact entre les différentes surfaces annulaires d'appui grâce à une tension axiale exercée par le tirant.

L'invention sera mieux comprise à la lecture de la description faite ci-après à titre indicatif mais non limitatif en référence aux dessins annexés, sur lesquels :
- la figure 1 est une vue en coupe axiale de la partie rotorique, complètement assemblée, d'un exemple de réalisation d'un système de suspension et d'entraînement en rotation utilisant un arbre tournant modulaire conformément à l'invention,
- la figure 2 est une vue en coupe axiale de la partie rotorique de l'exemple de réalisation de la figure 1 montrant l'étape de centrage entre les modules,
- la figure 3 est une vue en coupe axiale de la partie rotorique de l'exemple de réalisation de la figure 1 montrant l'étape de mise en place d'un outillage,
- la figure 4 est une vue en coupe axiale de la partie rotorique de l'exemple de réalisation de la figure 1 montrant l'étape de réalisation de la fin de l'assemblage d'un deuxième module palier magnétique sur un module moteur,
- la figure 5 est une vue en coupe axiale d'un exemple de compresseur d'air modulaire équipé d'un système de suspension et d'entraînement en rotation utilisant un arbre tournant modulaire selon l'invention, et
- la figure 6 est une vue en coupe axiale de la partie rotorique d'un système de suspension et d'entraînement en rotation utilisant un arbre tournant monobloc de l'art antérieur.

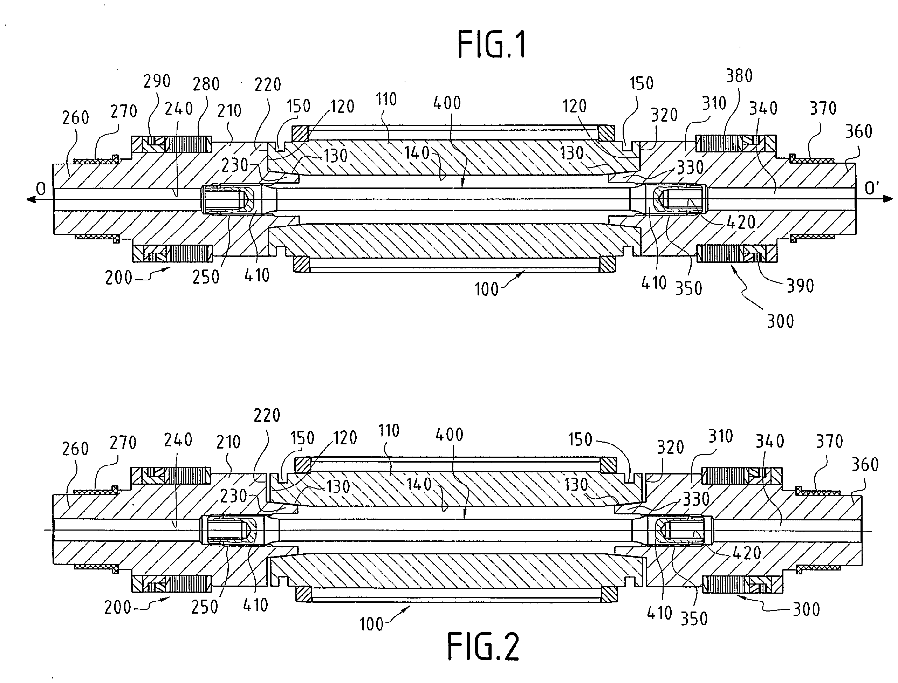

On se réfère maintenant aux dessins, et plus particulièrement, à la figure 1 illustrant un exemple de partie rotorique entièrement assemblée conformément à l'invention d'un système de suspension et d'entraînement en rotation d'un arbre tournant modulaire ou rotor dont l'axe de rotation est OO'. Le rotor de ce système comporte un module moteur 100, un premier module palier magnétique 200 et un deuxième module palier magnétique 300.

La longueur et le diamètre du module moteur 100 sont choisis en fonction des besoins spécifiques de l'application et appartiennent à une famille de modules standardisés. Le module moteur 100 comporte un arbre tournant 110 dans lequel est réalisé un alésage axial 140 et qui présente sur chaque extrémité une première surface frontale annulaire d'appui 120 délimitant une première région conique 130.

Les deux modules paliers magnétiques 200, 300 peuvent être identiques ou différents. La longueur et le diamètre de chaque module sont définis en fonction des dimensions du module moteur 100, de la dynamique du système, de la taille des roues, rouets ou autres organes fonctionnels et des besoins spécifiques de l'application. Les modules paliers magnétiques 200, 300 appartiennent à une famille de modules standardisés.

Le premier module palier magnétique 200 comporte un premier arbre tournant 210 muni d'un alésage 240 ayant une extrémité qui présente une deuxième surface frontale annulaire d'appui 220 délimitant une deuxième région de révolution conique 230, et destinée à coopérer avec l'une des premières surfaces frontales 120 du module moteur 100.

De façon identique, le deuxième module palier magnétique 300 comporte un deuxième arbre tournant 310 muni d'un alésage axial 340. Ce deuxième arbre tournant 310 a une extrémité présentant une troisième surface frontale annulaire d'appui 320 qui délimite une troisième région de révolution conique 330, et est destinée à coopérer avec l'autre des premières surfaces frontales 120 du module moteur 100.

Le module moteur 100 et les premier et deuxième modules paliers magnétiques 200, 300 sont centrés entre eux par la coopération des premières régions coniques 130 et des deuxième et troisième régions coniques 230, 330.

Sur la figure 1, on a représenté des régions coniques 130 concaves et des régions coniques 230, 330 convexes. Toutefois, les convexités et concavités pourraient être inversées dès lors que les régions coniques 230, 330 sont complémentaires des régions coniques 130. Les deux régions coniques 130 pourraient elles-mêmes être de concavités différentes, les régions coniques 230, 330 complémentaires des deux régions coniques 130 étant alors elles-mêmes de concavités différentes.

Les régions coniques 130, 230, 330 et plus particulièrement les régions coniques convexes peuvent être en forme de cônes standard massifs ou fendus. Les cônes fendus permettent une meilleure adaptation entre les modules.

En général, la conicité des régions coniques 130, 230, 330 peut être quelconque, mais de préférence cette conicité peut appartenir à une série principale de conicité standardisée. L'angle d'ouverture des cônes est de préférence compris entre environ 5° et 20°. II peut être par exemple de l'ordre de 11° (correspondant à une conicité de un cinquième).

Les différents modules 100, 200, 300 sont centrés entre eux par l'intermédiaire des régions coniques 130, 230, 330. Le centrage assure une qualité d'équilibrage suffisante pour un bon fonctionnement du système, bien que les modules paliers magnétiques 200, 300 puissent tolérer de grands balourds jusqu'à environ 50 micromètres sans difficulté.

Le module moteur 100 et les premier et deuxième modules paliers magnétiques 200, 300 sont assemblés solidairement avec une pression de contact entre les surfaces annulaires d'appui 120, 220, 320. Cette pression est assurée grâce à une tension axiale exercée par un goujon ou tirant 400 garantissant un contact facial permanent entre les trois modules 100, 200, 300 quelles que soient les conditions de fonctionnement, de vitesse ou de température. Le tirant 400 traverse l'alésage 140 du module moteur 100 et comporte des bouts filetés 410 vissés dans des parties taraudées 250, 350 des alésages 240, 340 des premier et deuxième modules paliers magnétiques 200, 300.

Les surfaces annulaires d'appui 120, 220, 320 des différents modules 100, 200, 300 sont complémentaires et peuvent être des surfaces courbées ou planes. De préférence, ces surfaces sont toutefois rectifiées et perpendiculaires à l'axe de rotation OO'. La pression de contact entre ces surfaces d'appui 120, 220, 320 assure la continuité des raideurs entre les différents modules 100, 200, 300 et par conséquent, la dynamique de l'arbre tournant reste équivalente à celle d'un arbre monobloc. Cette dynamique s'en trouve même améliorée grâce à l'alésage axial 140, 240, 340 traversant les différents modules 100, 200, 300 qui allège le poids de l'arbre tournant.

Par ailleurs, le concept modulaire n'aliène en rien les deux extrémités libres 260, 360 des arbres tournants 210, 310 des paliers magnétiques 200, 300, c'est-à-dire celles qui ne sont pas reliées au module moteur 100. Ces extrémités libres peuvent accueillir, outre des bagues 270, 370 de paliers de secours traditionnellement associés aux paliers magnétiques, des roues ou autres organes fonctionnels adaptés aux besoins spécifiques de l'application. Quant aux extrémités non libres des arbres tournants 210, 310 des modules paliers magnétiques 200, 300, elles sont taraudées sur une partie 250, 350 de leur alésage 240, 340 pour recevoir le tirant 400 et sont entièrement solidaires de l'arbre tournant 110 du module moteur 100.

En particulier et à titre d'exemple, le système illustré par la figure 1, présente d'une part, des surfaces d'appuis perpendiculaires à l'axe de rotation OO' et d'autre part, les premières régions coniques 130 sont concaves et les deuxièmes et troisièmes régions coniques 230, 330 sont convexes avec une conicité égale à un cinquième.

On se réfère maintenant à la figure 2 montrant la première étape d'assemblage entre les différents modules 100, 200, 300. Au départ, le tirant 400 est glissé dans l'alésage 140 de l'arbre tournant 110 du module moteur 100. Ensuite, les premier et deuxième modules paliers magnétiques 200, 300 sont montés sur les extrémités du module moteur 100 de telle façon qu'à la fois, les régions coniques convexes 230, 330 des modules paliers magnétique 200, 300 coopèrent avec les régions coniques concaves 130 du palier moteur 100 et les bouts filetés 410 du tirant 400 coopèrent avec les parties taraudées 250, 350 des modules paliers magnétiques 200, 300. A ce stade, les régions coniques convexes 230, 330 s'engagent dans les régions coniques concaves 130, sans que les faces annulaires d'appuis 120, 220, 320 soient en contact. Ceci garantit d'une part, un bon centrage et par conséquent une bonne qualité d'équilibrage (par exemple, Qualité 2,5) et d'autre part, un bon appui facial entre les modules 100, 200, 300 lorsque le frettage conique est réalisé ultérieurement par une tension exercée par le tirant 400.

Dans le cas où les régions coniques 130 sont convexes et les régions coniques 230, 330 sont concaves, le principe de montage et l'adaptation des modules sont similaires au cas précité.

Dans le cas où les cônes convexes 230, 330 sont fendus, leur adaptation est similaire au montage des portes-outils utilisés sur les broches d'usinage à grande vitesse.

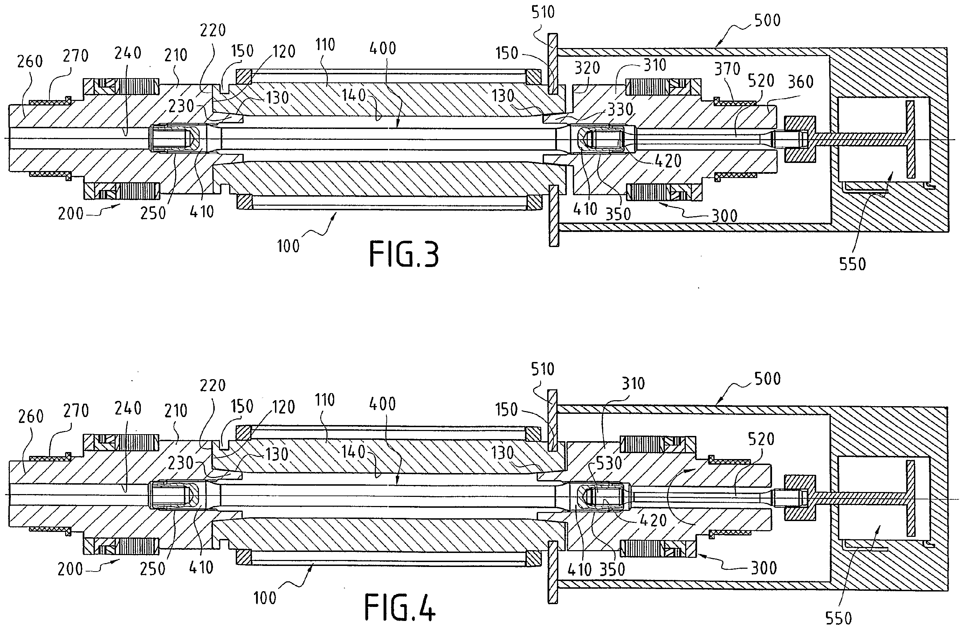

Comme le montre la figure 3, un outillage 500 est monté sur un côté du système, par exemple sur le côté du deuxième module palier magnétique 300.

L'arbre tournant 110 du module moteur 100 comporte à au moins une de ses extrémités, et de préférence à chacune de ses extrémités, une rainure circonférentielle 150 pour le positionnement de l'outillage 500. Par ailleurs, le tirant 400 comporte sur chacune de ses extrémités un taraudage 420 (filetage intérieur) destiné à recevoir l'outillage 500.

Des pinces ou mandrins 510 de l'outillage 500 s'accrochent ou se positionnent dans la rainure circonférentielle 150 formée sur l'extrémité du module moteur 100 adjacent au deuxième module palier magnétique 300. Bien évidemment, l'outillage 500 peut être invariablement placé d'un côté comme de l'autre lorsqu'il existe deux rainures circonférentielles 150.

Une tige 520 appartenant à l'outillage 500 est vissée dans le taraudage 420 du tirant 400 engagé dans le deuxième module palier magnétique 300. Après que le tirant 400 a été vissé dans le premier module palier magnétique 200, l'outillage 500, par un moyen 550 par exemple hydraulique, exerce un effort de traction sur le tirant 400 qui s'allonge en réalisant le frettage conique ainsi que la mise en contact des faces d'appui 120, 220 entre le premier module palier magnétique 200 et le module moteur 100, c'est-à-dire du côté opposé à l'outillage 500.

La figure 4 montre qu'en gardant l'outillage 500 en place, le deuxième module palier magnétique 300 est vissé autour du tirant 400 jusqu'à ce que la mise en contact des régions coniques 130 et 330 entre le deuxième module palier magnétique 300 et le module moteur 100 soient réalisés. Ceci peut être effectué manuellement ou par un tout autre moyen. Finalement, la tension de l'outillage 500 est relâchée et en démontant l'outillage 500 une tension subsiste dans le tirant 400, assurant le frettage conique des deux modules paliers magnétiques 200, 300 sur le module moteur 100 comme on peut le voir sur la figure 1.

En ce qui concerne les stators associés aux différents modules 100, 200, 300, le montage se fait aussi de manière modulaire.

Bien évidemment, le système peut être désassemblé en procédant selon un ordre inversé des étapes mises en oeuvre lors de son assemblage. Ainsi tout module moteur standard 100 peut être monté ou démonté sur tout module palier magnétique standard 200, 300.

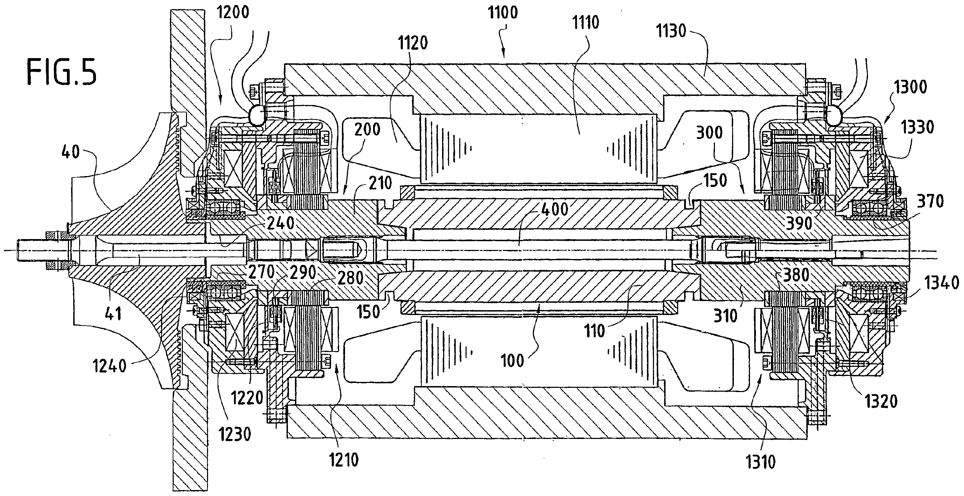

On a représenté sur la Figure 5, à titre d'exemple, un compresseur d'air modulaire équipé d'un système de suspension et d'entraînement en rotation d'un arbre tournant modulaire conformément à l'invention.

La partie rotorique modulaire de ce compresseur d'air peut être tout à fait analogue à celle qui a été décrite en référence aux figures 1 à 4, avec notamment un module moteur 100 comportant un arbre tournant 110 alésé et des modules paliers magnétiques 200, 300 comprenant chacun un arbre tournant 210, 310 alésé, avec un tirant 400 maintenant plaqués les modules paliers magnétiques d'extrémité 200, 300 contre le module moteur central 100. La coopération des surfaces frontales d'appui et des régions coniques complémentaires des différents modules 100, 200, 300 est identique à celle qui a été décrite en référence aux figures 1 à 4 et ne sera pas décrite à nouveau en référence à la figure 5.

Sur la figure 5, on voit un rouet 40 monté en porte-à-faux avec son arbre 41 engagé dans l'alésage 240 du premier module palier magnétique 200 du côté opposé à la partie filetée recevant une extrémité du tirant 400.

Le module moteur 100 constitue le rotor du moteur et coopère avec un stator 1100 comprenant des bobines magnétisantes 1120 et une carcasse feuilletée 1110 montée sur un bâti 1130.

Les stators de palier magnétique 1200 et 1300 coopérant avec les modules paliers magnétiques 200 et 300 sont démontables et peuvent être rapportés sur le bâti 1130 de façon classique avec des moyens de liaison tels que des boulons.

Les modules paliers magnétiques 200 et 300 qui constituent les parties rotoriques sont équipés d'armatures feuilletées 280, 380 pour les paliers magnétiques radiaux et d'armatures feuilletées 290, 390 pour les détecteurs associés et comprennent en outre des bagues 270, 370 de support de roulements à bille de secours.

Les parties statoriques de palier magnétique 1200 et 1300 comprennent les électro-aimants d'excitation 1210, 1310 coopérant avec les armatures rotoriques 280, 380 et les détecteurs de déplacement radial 1220, 1320 coopérant avec les armatures rotoriques 290, 390. Des butées magnétiques axiales 1230, 1330 et des détecteurs axiaux 1240, 1340 sont également incorporés dans les parties statoriques de palier magnétique 1200 et 1300 et coopèrent avec les modules paliers magnétiques 200 et 300.

Un compresseur à air tel que celui représenté sur la figure 5 ou tout autre appareil équipé de façon similaire d'un système de suspension et d'entraînement en rotation selon l'invention est ainsi entièrement modulaire puisque chaque partie rotorique et statorique de chacun des composants (moteur électrique, premier ensemble de palier magnétique, deuxième ensemble de palier magnétique) peut être conçue, fabriquée et montée séparément, ce qui rend particulièrement souples la conception, la fabrication, le montage et la maintenance de l'ensemble de la machine.

La présente invention n'est nullement limitée par les exemples qui viennent d'être décrits. De nombreuses variantes sont possible, notamment au niveau du nombre de modules préfabriqués à assembler, de la forme des surfaces d'appuis, ou de la forme des régions coniques des éléments modulaires rotoriques.

## Revendications

1. Système modulaire de suspension et d'entraînement en rotation d'un arbre tournant, comprenant :
- un module moteur (100) comportant un arbre tournant central (110) présentant sur chaque extrémité une première surface frontale annulaire d'appui (120) délimitant une première région conique (130), **caractérisé en ce qu'**il comprend
- un premier module palier magnétique (200) comportant un premier arbre tournant (210), ce premier arbre tournant (210) ayant une extrémité présentant une deuxième surface frontale annulaire d'appui (220) délimitant une deuxième région conique (230), et destinée à coopérer avec l'une des premières surfaces frontales annulaires d'appui (120) du module moteur (100),
- un deuxième module palier magnétique (300) comportant un deuxième arbre tournant (310), ce deuxième arbre tournant (310) ayant une extrémité présentant une troisième surface frontale annulaire d'appui (320) délimitant une troisième région conique (330), et destinée à coopérer avec l'autre des premières surfaces frontales annulaires d'appui (120) du module moteur (100),
et **en ce que** le module moteur (100) et les premier et deuxième modules paliers magnétiques (200, 300) sont centrés entre eux par la coopération entre d'une part les premières régions coniques (130), et d'autre part les deuxième et troisième régions coniques (230, 330) et sont assemblés solidairement avec une pression de contact entre d'une part les premières surfaces frontales annulaires d'appui (120), et d'autre part les deuxième et troisième surfaces frontales annulaires d'appui (220, 320) par l'intermédiaire d'un tirant (400) à bouts filetés (410) vissés dans les premier et deuxième modules paliers magnétiques (200, 300) et passant dans des premier, deuxième et troisième alésages (140, 240, 340) alignés axialement et ménagés dans le module moteur (100) et les premier et deuxième modules paliers magnétiques (200, 300) respectivement.

2. Système de suspension selon la revendication 1, **caractérisé en ce que** les premiers, deuxième et troisième surfaces frontales annulaires d'appui (120, 220, 320) respectivement du module moteur (100) et des premier et deuxième modules paliers magnétiques (200, 300) sont perpendiculaires à un axe de rotation de l'arbre tournant central (110).

3. Système de suspension selon l'une quelconque des revendications 1 et 2, **caractérisé en ce que** les premières régions coniques (130) sont concaves et s'engagent avec frettage respectivement dans les deuxième et troisième régions coniques (230, 330) qui sont convexes.

4. Système de suspension selon l'une quelconque des revendications 1 et 2, **caractérisé en ce qu'**au moins une première région conique est convexe et s'engage avec frettage dans une deuxième ou troisième région conique qui est concave.

5. Système de suspension selon l'une quelconque des revendications 1 à 4, **caractérisé en ce qu'**au moins l'une des premières (130), deuxième (230) et troisième (330) régions coniques est un cône standard massif.

6. Système de suspension selon l'une quelconque des revendications 1 à 4, **caractérisé en ce qu'**au moins l'une des premières (130), seconde (230) et troisième (330) régions coniques est un cône standard fendu.

7. Système de suspension selon l'une quelconque des revendications 1 à 6, **caractérisé en ce que** les premières, deuxième et troisième régions coniques (130, 230, 330) présentent un angle d'ouverture au sommet compris entre environ 5° et 20°.

8. Système de suspension selon l'une quelconque des revendications 1 à 7, **caractérisé en ce qu'**une extrémité du premier arbre tournant (210) du premier module palier magnétique (200) est taraudée sur une partie du deuxième alésage (240) pour recevoir le tirant (400) et l'autre extrémité (260) est libre pour accueillir un moyen de fixation d'un organe fonctionnel tel qu'une roue.

9. Système de suspension selon l'une quelconque des revendications 1 à 7, **caractérisé en ce qu'**une extrémité du deuxième arbre tournant (310) du deuxième module palier magnétique (300) est taraudée sur une partie du troisième alésage (340) pour recevoir le tirant (400) et l'autre extrémité (360) est libre pour accueillir un moyen de fixation d'un organe fonctionnel tel qu'une roue.

10. Système de suspension selon l'une quelconque des revendications 1 à 9, **caractérisé en ce que** l'arbre tournant central (110) du module moteur (100) comporte à au moins l'une de ses extrémités une rainure circonférentielle (150) pour le positionnement d'un outillage (500) permettant d'assembler le module moteur (100), et les premier et deuxième modules paliers magnétiques (200, 300).

11. Système de suspension selon l'une quelconque des revendications 1 à 10, **caractérisé en ce que** le tirant (400) comporte sur chacune de ses extrémités un taraudage (420) destiné à recevoir un outillage (500) permettant d'assembler le module moteur (100), et les premier et deuxième modules paliers magnétiques (200, 300).

12. Module palier magnétique (200, 300) pour un système de suspension et d'entraînement en rotation selon la revendication 1, **caractérisé en ce qu'**il comporte un arbre tournant (210 ; 310) à alésage axial (240 ; 340), l'arbre tournant (210 ; 310) présentant sur au moins une de ses extrémités une surface frontale annulaire d'appui (220 ; 320) délimitant une région conique (230 ;330) et destinée à être assemblée solidairement avec une extrémité complémentaire d'un autre arbre tournant (110) par l'intermédiaire d'un tirant (400) vissé dans l'alésage (240 ; 340) de l'arbre tournant (210 ; 310) du module palier magnétique (200 ; 300).

13. Module moteur (100) pour un système de suspension et d'entraînement en rotation selon la revendication 1, **caractérisé en ce qu'**il comporte un arbre tournant (110) à alésage axial (140), l'arbre tournant (110) présentant sur chaque extrémité une surface frontale annulaire d'appui (120) délimitant une région conique (130) de l'alésage axial et une rainure circonférentielle (150) étant formée à au moins l'une des extrémités de l'arbre tournant (110).

14. Procédé d'assemblage d'un système de suspension et d'entraînement en rotation d'un arbre tournant selon la revendication 1, **caractérisé en ce qu'**il comprend les étapes suivantes;
a/ centrer un module moteur (100) traversé par un tirant (400) avec des premier et deuxième modules paliers magnétiques (200; 300) à l'aide de régions coniques complémentaires (130 ; 230, 330) formées d'une part aux extrémités du module moteur (100) et d'autre part à une extrémité de chacun des premier et deuxième modules paliers magnétiques (200, 300),
b/ immobiliser le module moteur (100) et exercer, sur une première extrémité du tirant (400), une force extérieure de traction dans la direction de l'axe OO' du module moteur (100) de manière à réaliser un frettage conique ainsi que la mise en contact de surfaces annulaires d'appui (120, 220) formées respectivement à une extrémité du module moteur (100) et à une extrémité du premier module palier magnétique qui coopère avec l'autre extrémité du tirant (400),
c/ maintenir la force extérieure de traction et visser le deuxième module palier magnétique (300) non fretté autour de la première extrémité du tirant (400) réalisant la mise en contact d'une région conique (330) de ce deuxième module avec une région conique (130) du module moteur (100), et
d/ supprimer la force extérieure de traction, de telle sorte que le module moteur (100) et les premier et deuxième modules paliers magnétiques (200, 300) soient assemblés solidairement avec une pression de contact entre les différentes surfaces annulaires d'appui (120, 220, 320) grâce à une tension axiale exercée par le tirant (400).

## Patentansprüche

1. Modulares System zur Aufhängung und zum Drehantrieb einer drehenden Welle, aufweisend:
- ein Motormodul (100), welches eine zentrale, drehende Welle (110) aufweist, welche
an jedem Ende eine erste ringförmige Anschlagstirnfläche (120)
aufweist, welche einen ersten konischen Bereich (130) abgrenzt, **dadurch gekennzeichnet, dass** es Folgendes aufweist:
- ein erstes Magnetlagermodul (200), welches eine erste drehende Welle (210) aufweist, wobei diese erste drehende Welle (210) ein Ende besitzt, welches eine zweite ringförmige Anschlagstirnfläche (220) aufweist, welche einen zweiten konischen Bereich (230) abgrenzt und dafür vorgesehen ist, mit der einen der ersten ringförmigen Anschlagstirnflächen (120) des Motormoduls (100) zusammenzuwirken,
- ein zweites Magnetlagermodul (300), welches eine zweite drehende Welle (310) aufweist, wobei diese zweite drehende Welle (310) ein Ende besitzt, welches eine dritte ringförmige Anschlagstirnfläche (320) aufweist, welche einen dritten konischen Bereich (330) abgrenzt und dafür vorgesehen ist, mit der anderen der ersten ringförmigen Anschlagstirnflächen (120) des Motormoduls (100) zusammenzuwirken,
und dass das Motormodul (100) und das erste und zweite Magnetlager (200, 300) durch das Zusammenwirken zwischen einerseits den ersten konischen Bereichen (130) und andererseits dem zweiten und dritten konischen Bereich (230, 330) untereinander zentriert und fest zusammengebaut sind mit einem Kontaktdruck zwischen einerseits den ersten ringförmigen Anschlagstirnflächen (120) und andererseits der zweiten und dritten ringförmigen Anschlagstirnfläche (220, 320) mit Hilfe eines Ankerbolzens (400) mit Gewindeenden (410), welche in das erste und zweite Magnetlagermodul (200, 300) geschraubt sind und in ersten, zweiten und dritten Bohrungen (140, 240, 340) durchgeführt sind, welche axial ausgerichtet sind und in dem Motormodul (100) und dem ersten und zweiten Magnetlagermodul (200, 300) jeweils ausgeführt sind.

2. Aufhängungssystems nach Anspruch 1, **dadurch gekennzeichnet, dass** die erste, zweite und dritte ringförmige Anschlagstirnfläche (120, 220, 320) jeweils des Motormoduls (100) und des ersten und zweiten Magnetlagermoduls (200, 300) senkrecht zu einer Drehachse der zentralen drehenden Welle (110) sind.

3. Aufhängungssystems nach einem der Ansprüche 1 und 2, **dadurch gekennzeichnet, dass** die ersten konischen Bereiche (130) konkav sind und mit Klemmung jeweils mit dem zweiten und dritten konischen Bereich (230, 330), welche konvex sind, in Eingriff sind.

4. Aufhängungssystems nach einem der Ansprüche 1 und 2, **dadurch gekennzeichnet, dass** mindestens ein erster konischer Bereich konvex ist und mit Klemmung mit einem zweiten oder dritten konischen Bereich, welcher konkav ist, in Eingriff ist.

5. Aufhängungssystems nach einem der Ansprüche 1 bis 4, **dadurch gekennzeichnet, dass** mindestens der eine des ersten (130), zweiten (230) und dritten (330) konischen Bereichs ein massiver Standardkonus ist.

6. Aufhängungssystems nach einem der Ansprüche 1 bis 4, **dadurch gekennzeichnet, dass** mindestens der eine des ersten (130), zweiten (230) und dritten (330) konischen Bereichs ein geschlitzter Standardkonus ist.

7. Aufhängungssystems nach einem der Ansprüche 1 bis 6, **dadurch gekennzeichnet, dass** der erste, zweite und dritte konische Bereich (130, 230, 330) einen Öffnungswinkel am Scheitel aufweist, welcher ungefähr zwischen 5° und 20° liegt.

8. Aufhängungssystems nach einem der Ansprüche 1 bis 7, **dadurch gekennzeichnet, dass** ein Ende der ersten drehenden Welle (210) des ersten Magnetlagermoduls (200) über einen Abschnitt der zweiten Bohrung (240) mit einem Innengewinde versehen ist, um den Ankerbolzen (400) aufzunehmen, und das andere Ende (260) frei ist, um ein Befestigungsmittel eines funktionellen Organs, wie beispielsweise ein Rad, aufzunehmen.

9. Aufhängungssystems nach einem der Ansprüche 1 bis 7, **dadurch gekennzeichnet, dass** ein Ende der zweiten drehenden Welle (310) des zweiten Magnetlagermoduls (300) über einen Abschnitt der dritten Bohrung (340) mit einem Innengewinde versehen ist, um den Ankerbolzen (400) aufzunehmen, und das andere Ende (360) frei ist, um ein Befestigungsmittel eines funktionellen Organs, wie beispielsweise ein Rad, aufzunehmen.

10. Aufhängungssystems nach einem der Ansprüche 1 bis 9, **dadurch gekennzeichnet, dass** die zentrale drehende Welle (110) des Motormoduls (100) an mindestens einem ihrer Enden eine Umfangsnut (150) zur Positionierung eines Werkzeugs (500) aufweist, welches es ermöglicht, das Motormodul (100) und das erste und zweite Magnetlagermodul (200, 300) zusammenzubauen.

11. Aufhängungssystems nach einem der Ansprüche 1 bis 10, **dadurch gekennzeichnet, dass** der Ankerbolzen (400) an jedem seiner Enden ein Innengewinde (420) aufweist, welches dafür vorgesehen ist, ein Werkzeug (500) aufzunehmen, welches es ermöglicht, das Motormodul (100) und das erste und zweite Magnetlagermodul (200, 300) zusammenzubauen.

12. Magnetlagermodul (200, 300) für ein System zur Aufhängung und zum Drehantrieb nach Anspruch 1, **dadurch gekennzeichnet, dass** es eine drehende Welle (210; 310) mit axialer Bohrung (240; 340) aufweist, wobei die drehende Welle (210; 310) an mindestens einem ihrer Enden eine ringförmige Anschlagstirnfläche (220; 320) aufweist, welche einen konischen Bereich (230; 330) abgrenzt und dafür vorgesehen ist, fest mit einem komplementären Ende einer anderen drehenden Welle (110) mit Hilfe eines in die Bohrung (240; 340) der drehenden Welle (210; 310) des Magnetlagermoduls (200; 300) geschraubten Ankerbolzens (400) zusammengebaut zu werden.

13. Motormodul (100) für ein System zur Aufhängung und zum Drehantrieb nach Anspruch 1, **dadurch gekennzeichnet, dass** es eine drehende Welle (110) mit axialer Bohrung (140) aufweist, wobei die drehende Welle (110) an jedem Ende eine ringförmige Anschlagstirnfläche (120) aufweist, welche einen konischen Bereich (130) der axialen Bohrung abgrenzt, und eine Umfangsnut (150) aufweist, welche an mindestens einem der Enden der drehenden Welle (110) ausgebildet ist.

14. Verfahren zum Zusammenbau eines Systems zur Aufhängung und zum Drehantrieb nach Anspruch 1, **dadurch gekennzeichnet, dass** es die folgenden Schritte aufweist:
a/ Zentrieren eines Motormoduls (100), welches von einem Ankerbolzen (400) durchquert wird, mit einem ersten und zweiten Lagermodul (200; 300) mit Hilfe von konischen, komplementären Bereichen (130; 230, 330), welche einerseits an den Enden des Motormoduls (100) und andererseits an einem Ende von jedem ersten und zweiten Magnetlagermodul (200, 300) ausgebildet sind,
b/ Festsetzen des Motormoduls (100) und Ausüben einer äußeren Zugkraft in Richtung der Achse OO' des Motormoduls (100) auf ein erstes Ende des Ankerbolzens (400), um eine konische Klemmung sowie das In-Kontakt-Bringen der ringförmigen Anschlagflächen (120, 220), welche jeweils an einem Ende des Motormoduls (100) und an einem Ende des ersten Magnetlagermoduls, welches mit dem anderen Ende des Ankerbolzens (400) zusammenwirkt, ausgebildet sind, zu auszuführen,
c/ Beibehalten der äußeren Zugkraft und Schrauben des nicht geklemmten zweiten Magnetlagermoduls (300) um das erste Ende des Ankerbolzens (400), um das In-Kontakt-Bringen eines konischen Bereichs (330) dieses zweiten Moduls mit einem konischen Bereich (130) des Motormoduls (100) auszuführen, und
d/ Beseitigen der äußeren Zugkraft, so dass das Motormodul (100) und das erste und zweite Magnetlagermodul (200, 300) fest mit einem Kontaktdruck zwischen den verschiedenen ringförmigen Anschlagflächen (120, 220, 320) Dank einer durch den Ankerbolzen (400) ausgeübten axialen Spannung zusammengebaut ist.

## Claims

1. Modular system for suspending and driving a rotating shaft in rotation, comprising:
- a motor module (100) comprising a central rotating shaft (110) having, on each end, a first annular bearing front-end surface (120) delimiting a first tapered region (130), **characterized in that** it comprises
- a first magnetic bearing module (200) comprising a first rotating shaft (210), this first rotating shaft (210) having an end having a second annular bearing front-end surface (220) delimiting a second tapered region (230), and intended to cooperate with one of the first annular bearing front-end surfaces (120) of the motor module (100),
- a second magnetic bearing module (300) comprising a second rotating shaft (310), this second rotating shaft (310) having an end having a third annular bearing front-end surface (320) delimiting a third tapered region (330), and intended to cooperate with the other of the first annular bearing front-end surfaces (120) of the motor module (100),
and **in that** the motor module (100) and the first and second magnetic bearing modules (200, 300) are mutually centred by the cooperation between, on the one hand, the first tapered regions (130), and, on the other hand, the second and third tapered regions (230, 330) and are securely assembled with a contact pressure between, on the one hand, the first annular bearing front-end surfaces (120), and, on the other hand, the second and third annular bearing front-end surfaces (220, 320) via a tie rod (400) with threaded ends (410) screwed into the first and second magnetic bearing modules (200, 300) and passing into first, second and third bores (140, 240, 340) axially aligned and formed in the motor module (100) and the first and second magnetic bearing modules (200, 300) respectively.

2. Suspension system according to Claim 1, **characterized in that** the first, second and third annular bearing front-end surfaces (120, 220, 320) respectively of the motor module (100) and of the first and second magnetic bearing modules (200, 300) are at right angles to an axis of rotation of the central rotating shaft (110).

3. Suspension system according to either one of Claims 1 and 2, **characterized in that** the first tapered regions (130) are concave and are hoop-fitted respectively in the second and third tapered regions (230, 330) which are convex.

4. Suspension system according to either one of Claims 1 and 2, **characterized in that** at least one first tapered region is convex and is hoop-fitted in a second or third tapered region which is concave.

5. Suspension system according to any one of Claims 1 to 4, **characterized in that** at least one of the first (130), second (230) and third (330) tapered regions is a solid standard cone.

6. Suspension system according to any one of Claims 1 to 4, **characterized in that** at least one of the first (130), second (230) and third (330) tapered regions is a slotted standard cone.

7. Suspension system according to any one of Claims 1 to 6, **characterized in that** the first, second and third tapered regions (130, 230, 330) exhibit an opening angle at the apex of between 5° and 20°.

8. Suspension system according to any one of Claims 1 to 7, **characterized in that** an end of the first rotating shaft (210) of the first magnetic bearing module (200) is tapped over a part of the second bore (240) to receive the tie rod (400) and the other end (260) is free to accommodate a fixing means for a functional member such as a wheel.

9. Suspension system according to any one of Claims 1 to 7, **characterized in that** an end of the second rotating shaft (310) of the second magnetic bearing module (300) is tapped over a part of the third bore (340) to receive the tie rod (400) and the other end (360) is free to accommodate a fixing means for a functional member such as a wheel.

10. Suspension system according to any one of Claims 1 to 9, **characterized in that** the central rotating shaft (110) of the motor module (100) comprises, at at least one of its ends, a circumferential groove (150) for positioning a tool (500) making it possible to assemble the motor module (100), and the first and second magnetic bearing modules (200, 300).

11. Suspension system according to any one of Claims 1 to 10, **characterized in that** the tie rod (400) comprises, on each of its ends, a tapping (420) intended to receive a tool (500) making it possible to assemble the motor module (100), and the first and second magnetic bearing modules (200, 300).

12. Magnetic bearing module (200, 300) for a suspension and rotation driving system according to Claim 1, **characterized in that** it comprises
a rotating shaft (210; 310) with axial bore (240; 340), the rotating shaft (210; 310) having, on at least one of its ends, an annular bearing front-end surface (220; 320) delimiting a tapered region (230; 330) and intended to be assembled securely with a complementary end of another rotating shaft (110) via a tie rod (400) screwed into the bore (240; 340) of the rotating shaft (210; 310) of the magnetic bearing module (200; 300).

13. Motor module (100) for a suspension and rotation driving system according to Claim 1, **characterized in that** it comprises a rotating shaft (110) with axial bore (140), the rotating shaft (110) having, on each end, an annular bearing front-end surface (120) delimiting a tapered region (130) of the axial bore and a circumferential groove (150) being formed at at least one of the ends of the rotating shaft (110).

14. Method for assembling a system for suspending and driving a rotating shaft in rotation according to Claim 1, **characterized in that** it comprises the following steps:
a/ centring a motor module (100) passed through by a tie rod (400) with first and second magnetic bearing modules (200; 300) using complementary tapered regions (130; 230; 330) formed on the one hand at the ends of the motor module (100) and on the other hand at an end of each of the first and second magnetic bearing modules (200, 300),
b/ immobilizing the motor module (100) and exerting, on a first end of the tie rod (400), an external pulling force in the direction of the axis OO' of the motor module (100) so as to produce a tapered hooping and to bring into contact annular bearing surfaces (120, 220) formed respectively at an end of the motor module (100) and at an end of the first magnetic bearing module which cooperates with the other end of the tie rod (400),
c/ maintaining the external pulling force and screwing the non-hooped second magnetic bearing module (300) around the first end of the tie rod (400) producing contact between a tapered region (330) of this second module and a tapered region (130) of the motor module (100), and
d/ eliminating the external pulling force, such that the motor module (100) and the first and second magnetic bearing modules (200, 300) are securely assembled with a contact pressure between the different annular bearing surfaces (120, 220, 320) by virtue of an axial tension exerted by the tie rod (400).
